# EUROPÄISCHE PATENTSCHRIFT

(11) **EP 3 963 408 B1**
(45) Veröffentlichungstag und Bekanntmachung des Hinweises auf die Patenterteilung: **25.06.2025**
(21) Anmeldenummer: 20723837.9
(22) Anmeldetag: 30.04.2020
(51) Int. Cl.: B60Q 1/00, F21V 8/00, G01S 7/481, G01S 17/10, G01S 17/89, G01S 17/931, G02B 5/18, G02B 5/32, G03H 1/00, G03H 1/02, G06V 20/58, B60R 11/04

(54) **AUSSENLEUCHTEINRICHTUNG FÜR EIN KRAFTFAHRZEUG**
EXTERNAL LIGHTING DEVICE FOR A MOTOR VEHICLE
DISPOSITIF D'ÉCLAIRAGE EXTÉRIEUR POUR UN VÉHICULE À MOTEUR

(30) Priorität: 03.05.2019 DE 102019206370
(43) Veröffentlichungstag der Anmeldung: 09.03.2022
(73) Patentinhaber: Audi AG, 85045 Ingolstadt (DE)
(72) Erfinder: KLUG, Markus, 85057 Ingolstadt (DE); MOLL, Tobias, 85055 Ingolstadt (DE); SCHEUCHENPFLUG, Johannes, 85107 Baar-Ebenhausen (DE)
(74) Vertreter: Hofstetter, Schurack & Partner
(86) Internationale Anmeldenummer: PCT/EP2020/062113
(87) Internationale Veröffentlichungsnummer: WO 2020/225123

(56) Entgegenhaltungen:
- DE-A1- 102012 004 817
- DE-A1- 102017 109 905
- FR-A1- 2 799 272
- KR-A- 20140 001 268

## Beschreibung

Die Erfindung betrifft eine Außenleuchteinrichtung für ein Kraftfahrzeug, wobei die Außenleuchteinrichtung eine Designblende sowie zumindest eine Erfassungseinrichtung mit einer Bilderfassungseinrichtung und einem Trägermedium umfasst. Außerdem betrifft die Erfindung ein Kraftfahrzeug mit einer derartigen Außenleuchteinrichtung.

Ein Kraftfahrzeug weist häufig ein Kamerasystem auf, das dazu ausgebildet ist, zumindest nahezu vollständig die Umgebung des Kraftfahrzeugs zu erfassen, das heißt eine Rundumsicht um das Kraftfahrzeug herum zu gewähren. Hierfür werden beispielsweise mittig im Frontbereich sowie in einem Heckbereich des Kraftfahrzeugs entsprechende Kamerasensoren verbaut. Es sind jedoch nicht alle Außenkomponenten des Kraftfahrzeugs zur dortigen Positionierung derartiger Kamerasensoren geeignet. Beispielsweise ergeben sich diverse Einschränkungen hinsichtlich der Positionierung aufgrund einer lokal beschränkten Verfügbarkeit von Bauraum, einer hohen Wahrscheinlichkeit für Verschmutzungen, zum Beispiel durch hochspritzendes Pfützenwasser, oder einer mit der Positionierung einhergehenden optischen Einschränkung hinsichtlich einer von dort aus erfassbaren Umgebung. Daher werden die Kamerasensoren häufig an vorgegebenen Positionen, wie mittig im Frontbereich, im Heckbereich und/oder auf den Seitenspiegeln des Kraftfahrzeugs angeordnet. Hinsichtlich der Positionierung am Kraftfahrzeug sind herkömmliche Kamerasysteme also nur eingeschränkt einsetzbar.

Aus dem Stand der Technik sind optische Beugungsgitter bekannt, die holographisch hergestellt werden und daher als holografische Gitter bezeichnet werden. Diesbezüglich ist aus der wissenschaftlichen Veröffentlichung "Volume-phase holographic gratings and their potential for astronomical applications" (S. C. Barden, J. A. Arns und W. S. Colburn, Proceedings SPIE 3355, Optical Astronomical Instrumentation, 1998) bekannt, dass Licht, das auf ein derartiges holografisches Gitter in einem Winkel trifft, der deutlich außerhalb des Winkelbereichs liegt, der die Bragg-Bedingung erfüllt, ungebeugt das holografische Gitter passiert. Trifft jedoch Licht aus einem Winkel auf das holografische Gitter, sodass die Bragg-Bedingung zumindest in etwa erfüllt ist, wird das Licht in einem Winkel gebeugt. Ein ähnliches Verhalten zeigt sich bezüglich einer Wellenlängenabhängigkeit des Einflusses des holografischen Gitters auf Licht. Denn Licht mit einer Wellenlänge, die deutlich außerhalb des Wellenlängenbereichs liegt, der durch die Bragg-Bedingung als sogenannte Bragg-Wellenlänge vorgegeben wird, passiert ebenfalls das holografische Gitter ohne gebeugt zu werden und lediglich Licht mit einer Wellenlänge, die die Bragg-Bedingung zumindest in etwa erfüllt, wird am holografischen Gitter gebeugt. Mittels komplexer holografischer Gitterstrukturen ist es somit beispielsweise möglich, dass Licht mit zwei verschiedenen Wellenlängenbereichen in jeweils demselben Winkel gebeugt wird. Außerdem kann durch ein holografisches Gitter beispielsweise Licht mit verschiedenen Wellenlängen in verschiedene Lichtwege aufgeteilt werden, sodass mithilfe eines holografischen Gitters ein dispersiver Strahlteiler realisiert werden kann.

Die DE 10 2017 109 905 A1 zeigt eine Kraftfahrzeugbeleuchtungseinrichtung mit einem Scheinwerfer, der eine Lichtquelle für sichtbares Licht, eine Infrarotstrahlungsquelle und eine Lichtaustrittsoptik aufweist, die eine von der Lichtquelle und der Infrarotstrahlungsquelle beleuchtete Lichteintrittsfläche und eine Lichtaustrittsfläche aufweist, und mit einem optischen Ausgangs-Umlenkelement, das von der Infrarotstrahlungsquelle ausgehende Infrarotstrahlung auf die Lichteintrittsfläche richtet.

Es ist die Aufgabe der Erfindung, ein Kamerasystem für ein Kraftfahrzeug bereitzustellen, das unscheinbar in das Kraftfahrzeug integrierbar ist.

Die Aufgabe wird durch den Gegenstand des unabhängigen Patentanspruchs gelöst. Vorteilhafte Weiterbildungen der Erfindung sind durch die abhängigen Patentansprüche, die folgende Beschreibung sowie die Figuren offenbart.

Die erfindungsgemäße Außenleuchteinrichtung für ein Kraftfahrzeug ist insgesamt dazu ausgelegt, Bilddaten bereitzustellen, die mit dem erfassten Licht korrelieren. Die Außenleuchteinrichtung für ein Kraftfahrzeug ermöglicht somit letztendlich ein fotographisches und/oder videobasiertes Erfassen einer Umgebung des Kraftfahrzeugs. Die erfindungsgemäße Außenleuchteinrichtung ist beispielweise als Frontscheinwerfer, Rückleuchte, Fahrzeugblinker oder Bremsleuchte ausgebildet. Die Außenleuchteinrichtung umfasst eine Designblende sowie zumindest eine Erfassungseinrichtung. Die Designblende ist beispielsweise aus Kunststoff hergestellt und dient dazu, eine Leuchteinheit der Außenleuchteinrichtung, das heißt eine Lampe, die zum Beispiel als Leuchtdiode (LED für light-emitting diode) ausgebildet ist, zur Umgebung des Kraftfahrzeugs hin abzudecken. Die Designblende kann beispielsweise farbig gestaltet sein, zum Beispiel in Rot im Falle der Bremsleuchte.

Die Erfassungseinrichtung der Außenleuchteinrichtung ist dazu ausgelegt, die Bilddaten der Umgebung bereitzustellen. Hierfür umfasst sie zum einen eine Bilderfassungseinrichtung und zum anderen ein Trägermedium. Das Trägermedium ist als Lichtleiter ausgebildet, an dem ein Einkoppelbereich und ein Auskoppelbereich bereitgestellt sind. Das Trägermedium stellt also ein Lichtleitmedium dar. Das Trägermedium kann beispielsweise flächig ausgebildet sein, das heißt eine Breite und eine Länge des Trägermediums sind größer als eine Dicke des Trägermediums. Dieses flächige Trägermedium ist senkrecht zur Dicke des Trägermediums beispielsweise auf der Designblende befestigt. Das Trägermedium kann dafür zum Beispiel als Platte oder Folie aus transparentem Kunststoff oder Glas hergestellt sein. Das Trägermedium mit dem Einkoppelbereich und dem Auskoppelbereich ist insgesamt als ein flächiges an eine Oberflächenform der Designblende angepasstes Erfassungselement für die Designblende ausgebildet. Dieses Erfassungselement kann beispielsweise auf einer Oberfläche der Designblende aufgeklebt sein. Hierfür kann auf einer Seite des Erfassungselements, das heißt des Trägermediums, beispielsweise als Befestigungselement ein Klebstoff angeordnet sein, mit dem das Erfassungselement auf der Designblende aufgeklebt ist. Das Erfassungselement selbst ist hierbei nicht als starre Platte ausgebildet, sondern zumindest um einen Radius von typischerweise 2 cm zerstörungsfrei verbiegbar, sodass es beispielsweise auf einer gekrümmten Designblende, die zum Beispiel dazu ausgebildet ist, einen Frontscheinwerfer des Kraftfahrzeugs zu verblenden, angeordnet sein kann.

Der Einkoppelbereich selbst ist als ein holografisches Element mit einer ersten Ablenkstruktur ausgebildet. Eine Beschreibung einer Funktionsweise eines derartigen holografischen Elements, das häufig als optisches Gitter bezeichnet wird und das mittels holografischer Methoden hergestellt werden kann, findet sich beispielsweise in der oben zitierten wissenschaftlichen Publikation. Der Einkoppelbereich kann entsprechend zum Beispiel als Beugungsgitter realisiert sein. Die erste Ablenkstruktur ist dazu ausgelegt, Licht, das aus einer Umgebung auf die erste Ablenkstruktur fällt, in das Trägermedium einzukoppeln und dabei derart weit oder stark umzulenken, dass das eingekoppelte Licht die Grenzwinkelbedingung erfüllt. Das Trägermedium ist entsprechend dazu ausgebildet, das eingekoppelte Licht mittels interner Reflektion, bevorzugt Totalreflektion, von dem Einkoppelbereich an den Auskoppelbereich zu übertragen. Das Licht, das aus der Umgebung auf die erste Ablenkstruktur fällt und in das Trägermedium eingekoppelt wird, kann somit zum Beispiel innerhalb des Trägermediums in zick-zack-artigen Bewegungen entlang einer Richtung parallel zu einer Ebene der Oberfläche des Erfassungselements geleitet werden.

Der Auskoppelbereich ist als holografisches Element mit einer zweiten Ablenkstruktur ausgebildet. Sowohl die erste Ablenkstruktur des Einkoppelbereichs als auch die zweite Ablenkstruktur des Auskoppelbereichs können jeweils beispielsweise als Beugungsgitter realisiert sein. Die zweite Ablenkstruktur ist dazu ausgelegt, das eingekoppelte Licht, das auf die zweite Ablenkstruktur fällt, aus dem Trägermedium auszukoppeln. Der Einkoppelbereich und der Auskoppelbereich können sich dabei beispielsweise an verschiedenen Seite des Erfassungselements befinden. Beispielsweise kann der Einkoppelbereich die gesamte Oberfläche des Erfassungselements umfassen, die von der Designblende in Richtung der Umgebung gerichtet ist und somit zur Umgebung des Kraftfahrzeugs hin orientiert ist. Der Auskoppelbereich kann an der gegenüberliegenden Seite liegen und somit in Richtung der Oberfläche der Designblende orientiert sein. Alternativ oder zusätzlich dazu kann der Auskoppelbereich an einer Seite des Trägermediums angeordnet sein, sodass der Auskoppelbereich senkrecht zum beschriebenen Einkoppelbereich orientiert ist.

Die Bilderfassungseinrichtung der Erfassungseinrichtung ist dazu ausgebildet, das aus dem Erfassungselement, das heißt dem Trägermedium mit dem Einkoppelbereich und dem Auskoppelbereich, am Auskoppelbereich ausgekoppelte Licht zu erfassen und Bilddaten bereitzustellen, die mit dem erfassen Licht korrelieren. Die Bilderfassungseinrichtung ist also dazu ausgerichtet, Bilddaten aus dem in die Bilderfassungseinrichtung eingekoppelten Licht zu erzeugen oder zu generieren. Zum Erfassen des aus dem Trägermedium ausgekoppelten Lichts liegt die Bilderfassungseinrichtung an dem Auskoppelbereich an. Zur Befestigung der Bilderfassungseinrichtung an dem Trägermedium kann die Bilderfassungseinrichtung beispielsweise an das Trägermedium angeklebt werden. Alternativ kann das Trägermedium in einer Halteeinrichtung der Bilderfassungseinrichtung eingespannt werden. Bevorzugt kann die Bilderfassungseinrichtung als Bildsensor oder Kamera jeweils mit oder ohne abbildender Optik, wie zum Beispiel einer Linse oder einem Linsensystem realisiert sein. Die Bilderfassungseinrichtung kann beispielsweise als CCD-Sensor (Charged Coupled Device - ladungsgekoppelte Vorrichtung) oder als CMOS-Sensor (Complementary Metal Oxide Semiconductor - komplementärerer Metalloxidhalbleiter) ausgebildet sein. Bei dieser Ausgestaltung der Bilderfassungseinrichtung als Bildsensor kann das Trägermedium, an dem der Einkoppelbereich und der Auskoppelbereich angeordnet sind, die Aufgabe eines Objektivs, also einer abbildenden Optik, ausführen. Alternativ kann die Bilderfassungseinrichtung auch als Kamera oder Fotoapparat, insbesondere als Mikrokamera, wie sie beispielsweise in einem modernen Endgerät, wie einem Smartphone, ausgebildet ist, mit eigener abbildender Optik realisiert sein.

Die Bilderfassungseinrichtung ist also zum photographischen und/oder videobasierten Erzeugen eines Abbilds der Umgebung der Außenleuchteinrichtung ausgebildet. In der Regel ist eine Außenleuchteinrichtung eines Kraftfahrzeugs derart hoch relativ zum Fahruntergrund positioniert, dass diese weniger schnell verschmutzen als beispielsweise ein tiefer, zum Beispiel im Stoßdämpfer angeordneter Kamerasensor. Das Erfassungselement ist somit relativ exponiert am Kraftfahrzeug angeordnet, sodass eine vorteilhafte Übersicht über die Umgebung des Kraftfahrzeugs erreicht wird. Aufgrund ihrer Positionierung relativ zum Fahruntergrund verschmutzt das Erfassungselement außerdem in der Regel selten und ist gut sichtbar.

Durch die Integration der Erfassungseinrichtung in die Außenleuchteinrichtung für ein Kraftfahrzeug wird eine unscheinbare Realisierung einer Bilderfassungseinrichtung, wie beispielsweise einem Kamerasystem für ein Kraftfahrzeug, ermöglicht. Bei geeigneter Positionierung der Bilderfassungseinrichtung, beispielsweise unterhalb der Designblende oder in einem Randbereich, wie beispielsweise einem an die Designblende angrenzenden Rahmen der Außenleuchteinrichtung kann die Bilderfassungseinrichtung für einen Betrachter des Fahrzeugs nicht sichtbar und folglich unscheinbar in das Kraftfahrzeug integriert sein. Durch die exponierte Lage der Außenleuchteinrichtung am Kraftfahrzeug bietet sich bei einer entsprechenden Positionierung einzelner Erfassungseinrichtungen in allen jeweiligen Außenleuchteinrichtungen des Kraftfahrzeugs außerdem die Möglichkeit, die Umgebung des Kraftfahrzeugs als eine vollständige Rundumsicht zu erfassen. In diesem Fall kann ein Winkelbereich von 360 Grad um das Kraftfahrzeug herum vollständig in Form von Bilddaten bereitgestellt werden.

Erfindungsgemäß ist es vorgesehen, dass die Außenleuchteinrichtung eine Lichtquelle, eine Sensoreinrichtung und eine Auswerteeinrichtung umfasst und am Trägermedium ein Sensorauskoppelbereich bereitgestellt ist. Bei der Lichtquelle handelt es sich beispielsweise um einen Laser, der beispielsweise im Wellenlängenbereich von Infrarotlicht Licht aussendet. Diese Lichtquelle ist außerdem dazu ausgebildet, gepulstes Licht auszusenden. Das von der Lichtquelle ausgesendete Licht wird hierbei beispielsweise direkt in die Umgebung des Kraftfahrzeugs ausgesendet, wobei sich in der Umgebung zum Beispiel ein Objekt befindet. Bei der hier genannten Auswerteeinrichtung kann es sich um eine zusätzliche Auswerteeinrichtung der Außenleuchteinrichtung handeln. Diese kann jedoch alternativ dazu mit der bereits oben genannten Auswerteeinrichtung zur Bestimmung des Abblendsignals übereinstimmen, das heißt die Außenleuchteinrichtung kann nur eine Auswerteeinrichtung umfassen, die verschiedene Auswertevorgänge durchführen kann.

Die erste Ablenkstruktur des Einkoppelbereichs ist dazu ausgelegt, Licht, das von der Lichtquelle ausgesendet und an dem Objekt in der Umgebung reflektiert wurde, in das Trägermedium einzukoppeln. Die Lichtquelle ist also derart positioniert, dass diese beispielsweise in Richtung einer Wand in der Umgebung des Kraftfahrzeugs das gepulste Licht aussendet, das daraufhin an dieser Wand reflektiert und über den Einkoppelbereich ins Trägermedium eingekoppelt wird. Das Trägermedium ist dazu ausgebildet, das eingekoppelte reflektierte Licht mittels interner Reflektion von dem Einkoppelbereich an den Sensorauskoppelbereich zu übertragen. Der Sensorauskoppelbereich ist hierbei als holografisches Element an einer dritten Ablenkstruktur ausgebildet. Die dritte Ablenkstruktur kann beispielsweise als Beugungsgitter ausgebildet sein, genauso wie die entsprechende Ablenkstruktur am Auskoppelbereich sowie am Einkoppelbereich. Die dritte Ablenkstruktur ist dazu ausgelegt, das in das Trägermedium eingekoppelte reflektierte Licht aus dem Trägermedium auszukoppeln. Die Sensoreinrichtung ist nun derart relativ zum Erfassungselement und letztendlich zum Sensorauskoppelbereich orientiert, dass diese dazu ausgebildet ist, das am Sensorauskoppelbereich ausgekoppelte Licht zu erfassen und in Form von Sensordaten bereitzustellen. Die Sensordaten beschreiben eine Laufzeit des von der Lichtquelle ausgesendeten und an dem Objekt reflektierten Lichts, das von der Sensoreinrichtung erfasst wurde. Die Auswerteeinrichtung ist nun dazu ausgebildet, durch Auswerten der Sensordaten Entfernungsdaten, die eine Entfernung des Objekts von der Erfassungseinrichtung beschreiben, bereitzustellen.

Bei geeigneter Wahl der Lichtquelle sowie der Sensoreinrichtung kann somit beispielsweise eine Laserdistanzmessung durchgeführt werden, die beispielsweise eine Entfernung zwischen dem Kraftfahrzeug und dem Objekt, das heißt genau genommen zwischen der Außenleuchteinrichtung des Kraftfahrzeugs und dem Objekt bestimmt, wobei das Objekt in diesem Beispiel die Wand in der Umgebung des Kraftfahrzeugs ist. Entsprechende Entfernungsdaten können beispielsweise einem Fahrerassistenzsystem oder einer anderen Steuereinrichtung des Kraftfahrzeugs zur Verfügung gestellt werden, sodass beispielsweise anhand dieser Daten ein Parkassistent einen automatischen oder zumindest teilautomatischen Einparkvorgang des Kraftfahrzeugs in einer Parklücke neben besagter Wand planen und durchführen kann. Alternativ oder zusätzlich dazu kann anhand der Entfernungsdaten ein Ausfahren aus einer Einfahrt überwacht und optimiert, ein herannahendes und/oder bereits in einem toten Winkel zum Kraftfahrzeug befindliches Objekt erkannt, ein Objekt, das nur bei einem Nachhintenblicken des Fahrers über die Schulter ersichtlich ist, erfasst und/oder ein Notstoppen im Falle eines sich frontal oder seitlich auf das Fahrzeug zubewegenden Objekts durchgeführt werden. Der Vorteil der Außenleuchteinrichtung gegenüber herkömmlichen Umgebungserfassungseinrichtungen ist hierbei, dass diese großflächig auf optimaler Höhe in Kraftfahrzeughochrichtung jeweilige Teilbereiche der Umgebung des Kraftfahrzeugs erfasst. Denn die einzelnen Erfassungsbereiche der Außenleuchteinrichtungen sind nicht punktuelle ausgeführt, wie dies bei herkömmlichen Kamerasensoren der Fall ist, sondern großflächig, über die gesamte Oberfläche des zum Beispiel die Designblende vollständig oder zumindest bereichsweise bedeckenden Erfassungselements erstreckt ausgestaltet. Hierbei ist sogar bei beispielsweise bereichsweiser Beschmutzung des Kraftfahrzeugs, die sich zumindest bereichsweise über die Designblende der Außenleuchteinrichtung erstreckt, immer noch ermöglicht, dass die Umgebung des Kraftfahrzeugs erfasst wird, da es unwahrscheinlich ist, dass das großflächige Erfassungselement komplett von der Beschmutzung betroffen ist.

Zu der Erfindung gehören auch Ausgestaltungsformen, durch die sich zusätzliche Vorteile ergeben.

Eine Ausgestaltungsform der Erfindung sieht vor, dass zusätzlich zu dem Sensorauskoppelbereich an dem Trägermedium ein Lichteinkoppelbereich und ein Lichtauskoppelbereich bereitgestellt sind. Der Lichteinkoppelbereich ist als holografisches Element mit einer vierten Ablenkstruktur ausgebildet, die beispielsweise als Beugungsgitter ausgebildet ist. Die vierte Ablenkstruktur ist dazu ausgelegt, Licht, das von der Lichtquelle auf die vierte Ablenkstruktur fällt, in das Trägermedium einzukoppeln. Dieser Lichteinkoppelbereich ist beispielsweise neben der Lichtquelle, die gepulstes Licht aussendet, positioniert sein, sodass das von ihr ausgesendete gepulste Licht über den Lichteinkoppelbereich in das Trägermedium eingekoppelt wird. Das Trägermedium ist dazu ausgebildet, das eingekoppelte Licht mittels interner Reflektion von dem Lichteinkoppelbereich an den Lichtauskoppelbereich zu übertragen. Der Lichtauskoppelbereich ist als holografisches Element mit einer fünften Ablenkstruktur ausgebildet, die beispielsweise als Beugungsgitter ausgestaltet ist. Die fünfte Ablenkstruktur ist dazu ausgelegt, das übertragene Licht, das auf die fünfte Ablenkstruktur fällt, aus dem Trägermedium auszukoppeln und in die Umgebung auszusenden. Zusätzlich zu der reinen Einkopplung, dem Transport und der Auskopplung des jeweils aus der Umgebung in Richtung des Erfassungselements gesendeten Lichts kann bereits das Licht der Lichtquelle mittels des Trägermediums und folglich mittels des Erfassungselements zu einem gewünschten Auskoppelbereich, dem sogenannten Lichtauskoppelbereich, transportiert und von dort aus in die Umgebung ausgesendet werden. Das Trägermedium mit dem Lichteinkoppelbereich und dem Lichtauskoppelbereich kann hierbei von dem Trägermedium mit dem Einkoppelbereich in dem Ausgabebereich räumlich getrennt sein. Die vier genannten Koppelbereiche können jedoch auch an ein und demselben Trägermedium vorgesehen sein, sodass die Erfassungseinrichtung der Außenleuchteinrichtung lediglich ein flächiges Trägermedium aufweist, in das Licht aus verschiedenen Richtungen und mit verschiedenen Auskoppelbereichen als Zielpositionen ausgesendet wird. Hierdurch wird es beispielsweise möglich, dass sowohl die Lichtquelle als auch beispielsweise die Bilderfassungseinrichtung und die Sensoreinrichtung an jeweiligen Randbereichen der Außenleuchteinrichtung, beispielsweise an dem Rand der Designblende oder hinter der Designblende angeordnet sind und dennoch von einem vorgegebenen Bereich auf der Designblende Licht der Lichtquelle ausgesendet beziehungsweise Umgebungslicht eingekoppelt und zu der entsprechenden Sensoreinrichtung oder Bilderfassungseinrichtung übermittelt wird. Hierdurch wird das Erfassungselement der Außenleuchteinrichtung optisch unscheinbar und kann unsichtbar für einen Betrachter zum Beispiel in einen Frontscheinwerfer oder ein Rücklicht des Kraftfahrzeugs verbaut sein.

Der Lichteinkoppelbereich kann beispielsweise zumindest bereichsweise mit dem Auskoppelbereich übereinstimmen, wobei der Lichtauskoppelbereich zumindest bereichsweise mit dem Einkoppelbereich übereinstimmen kann.

Eine Ausgestaltungsform sieht vor, dass der Einkoppelbereich und der Auskoppelbereich als Ablenkstruktur zumindest ein optisches Gitter, insbesondere ein holografisches Oberflächengitter oder ein holografisches Volumengitter, aufweisen. In diesem Zusammenhang kann die Erfassungseinrichtung auch als HoloCam, kurz für holografische Kamera, bezeichnet werden.

Ein optisches Gitter, auch Beugungsgitter genannt, sowie dessen Wirkungsweise und Herstellungsverfahren ist, wie bereits erwähnt, allgemein bekannt, wie es beispielsweise aus der oben zitierten wissenschaftlichen Publikation hervorgeht. Grundsätzlich kann ein optisches Gitter auf zumindest abschnittsweise periodischen Strukturen, einer sogenannten Gitterstruktur, in einem Substrat beruhen. Mittels einer solchen Gitterstruktur kann ein optisches Gitter durch den physikalischen Effekt der Beugung eine Lichtlenkung, wie sie zum Beispiel von Spiegeln, Linsen oder Prismen bekannt ist, herbeiführen. Fällt Licht, das heißt fallen Lichtstrahlen auf das optische Gitter, wobei die einfallenden Lichtstrahlen insbesondere die Bragg-Gleichung erfüllen, werden die Lichtstrahlen durch das optische Gitter gebeugt oder abgelenkt. Die Lichtlenkung kann somit insbesondere durch Interferenzerscheinungen der durch das optische Gitter gebeugten Lichtstrahlen erfolgen. Die Ablenkstruktur des Einkoppelbereichs oder Auskoppelbereichs kann dementsprechend auch als Beugungsstruktur bezeichnet werden.

Vorzugsweise kann ein optisches Gitter gegenüber dem einfallenden Licht richtungsselektiv oder winkelselektiv ausgebildet sein. Somit kann nur Licht, insbesondere ein Anteil des Lichts, das aus einer vorbestimmten Einfallsrichtung, zum Beispiel in einem vorbestimmten Winkel, auf ein optisches Gitter fällt, abgelenkt werden. Licht, insbesondere ein Anteil des Lichts, das aus einer anderen Richtung auf das optische Gitter fällt, wird vorzugsweise nicht abgelenkt oder umso weniger, je größer der Unterschied zur vorbestimmten Einfallsrichtung ist. Der Lichtanteil, welcher von der vorbestimmten Einfallsrichtung oder Optimaleinfallsrichtung abweicht, kann folglich vorzugsweise ungehindert durch das Substrat mit dem optischen Gitter propagieren.

Zusätzlich oder alternativ kann ein optisches Gitter noch wellenlängenselektiv oder frequenzselektiv ausgebildet sein. Somit kann nur Licht, insbesondere ein erster Anteil des Lichts mit einer vorbestimmten Wellenlänge von dem optischen Gitter in einem bestimmten Beugungswinkel abgelenkt oder gebeugt werden. Licht, insbesondere ein zweiter Anteil des Lichts mit einer anderen als der vorbestimmten Wellenlänge wird vorzugsweise nicht abgelenkt, oder umso weniger je größer der Unterschied zur vorbestimmten Wellenlänge ist. Der zweite Lichtanteil, welcher von der vorbestimmten Wellenlänge oder Optimalwellenlänge abweicht, kann folglich vorzugsweise ungehindert durch das Substrat mit dem optischen Gitter propagieren. Dadurch kann beispielsweise von polychromatischem Licht, welches auf das optische Gitter trifft, wenigstens ein monochromatischer Lichtanteil abgespaltet werden. In vorteilhafter Weise ist der Ablenkeffekt für die Optimalwellenlänge maximal und fällt zu längeren und kürzeren Wellenlängen hin, beispielsweise gemäß einer Gaußglocke, ab oder wird schwächer. Insbesondere wirkt der Ablenkeffekt nur auf einen Bruchteil des sichtbaren Lichtspektrums und/oder in einem Winkelbereich kleiner als 90 Grad.

Eine Herstellung eines optischen Gitters kann insbesondere mittels Belichtung eines Substrats, also beispielsweise fotolithografisch oder holografisch, erfolgen. In diesem Zusammenhang kann das optische Gitter dann auch als holografisches oder holografisch-optisches Gitter bezeichnet werden. Es sind zwei Arten von holografisch-optischen Gittern bekannt: holografische Oberflächengitter (surface holografic gratings, kurz: SHG) und holografische Volumengitter (volume holografic gratings, kurz: VHG). Bei einem holografischen Oberflächengitter kann die Gitterstruktur durch optisches Verformen einer Oberflächenstruktur des Substrats erzeugt werden. Durch die veränderte Oberflächenstruktur kann auftreffendes Licht abgelenkt, zum Beispiel reflektiert werden. Beispiele für holografische Oberflächengitter sind sogenannte Sägezahn- oder Blazegitter. Im Gegensatz dazu kann die Gitterstruktur bei holografischen Volumengittern in das ganze Volumen oder einen Teilbereich des Volumens des Substrats eingearbeitet sein. Holografische Oberflächengitter und holografische Volumengitter sind in der Regel frequenzselektiv. Es sind jedoch auch optische Gitter bekannt die polychromatisches Licht beugen können. Diese werden als holografische Mehrfachvolumengitter (multiplexed volume holografic gratings, kurz: MVHG) bezeichnet und können beispielsweise durch Verändern der Periodizität der Gitterstruktur eines optischen Gitters oder durch Anordnen mehrerer holografisches Volumengitter hintereinander hergestellt werden.

Als Material für das besagte Substrat zum Einarbeiten eines optischen Gitters eignet sich besonders ein Polymer, insbesondere ein Fotopolymer, oder eine Folie, insbesondere eine fotosensitive Folie, zum Beispiel aus Kunststoff oder organischen Stoffen. Substrate die eine Ablenkstruktur zum Beugen von Licht, beispielsweise in Form eines optischen Gitters aufweisen, können auch als holografisch-optische Elemente (HOE) bezeichnet werden.

Durch die beschriebene Ausbildung des Einkoppelbereichs und des Auskoppelbereichs wird daher das Beugen des auf den Einkoppelbereich fallenden Lichts zur beispielsweise seitlich an der Deckplatte angeordneten Bilderfassungseinrichtung möglich, wodurch das Erfassungselement derart gestaltet sein kann, dass die Bilderfassungseinrichtung in der bevorzugten Einbaulage der Erfassungseinrichtung auf oder in der Designblende die Leuchteinheit nicht abdeckt.

**In** einer weiteren vorteilhaften Ausgestaltungsform der Erfindung ist es vorgesehen, dass das Erfassungselement auf der Designblende mittels einer Befestigungseinheit befestigt oder in die Designblende integriert ist. Die Befestigungseinheit kann beispielsweise als Klebstoff oder Adhäsionsfolie ausgebildet sein. Dadurch wird ermöglicht, dass, wenn die Befestigungseinheit als Adhäsionsfolie ausgebildet ist, das Erfassungselement direkt, also ohne Klebstoff, durch molekulare Kräfte an einer Oberfläche der Designblende haftet. Das Erfassungselement kann somit auf verschiedene Arten sowie besonders kostengünstig hergestellt sein, da es beispielsweise lediglich als dünne holografische Folie ausgebildet sein kann, die auf die Designblende geklebt wird.

Alternativ dazu kann das Erfassungselement in die Designblende selbst eingebaut sein. Beispielsweise kann hierfür ein vorgegebener Teilbereich der Designblende, die beispielsweise aus Kunststoff hergestellt ist, vorgesehen sein, in dem eine holografische Platte angeordnet ist, sodass das Erfassungselement fest in die Designblende integriert ist. Dies hat den Vorteil, dass eine derartige Anordnung des Erfassungselements besonders robust beispielsweise hinsichtlich von außen auf die Designblende einwirkende Kräfte ist, da beispielsweise auch im Rahmen des täglichen Fahrgebrauchs und damit verbundenen äußeren Krafteinwirkungen, beispielsweise durch häufige und intensive Wetterwechsel, das Erfassungselement stets fest in die Designblende integriert ist und sich folglich nicht ohne entsprechend starke äußerliche Einwirkung von der Designblende ablösen kann. Denn bei einer Befestigung mittels beispielsweise Klebstoff wäre es durchaus denkbar, dass bei entsprechenden Witterungsbedingungen das Erfassungselement von der Designblende abgelöst wird.

Eine weitere besonders vorteilhafte Ausgestaltungsform der Erfindung sieht vor, dass das Erfassungselement als transparente Platte, Folie oder Lack ausgebildet ist. Bevorzugt ist das Trägermedium des Erfassungselements flächig ausgebildet. Das flächige Trägermedium kann beispielsweise zwischen einem halben Millimeter und fünf Millimeter dick sein. Falls das flächige Trägermedium als transparente Folie ausgebildet ist, ist es außerdem biegbar ausgebildet, das heißt es kann zerstörungsfrei verformt werden, wobei als zerstörungsfreies Verformen ein zerstörungsfreies Verbiegen der Folie um einen Biegeradius von kleiner als zwei Zentimetern verstanden wird. Falls das flächige Trägermedium als transparenter Lack ausgebildet ist, kann es eine Dicke im Mikrometerbereich und folglich kleiner als einen Millimeter aufweisen. Hierdurch wird erreicht, dass das flächige Trägermedium mit dem Einkoppelbereich und dem Auskoppelbereich, das heißt das Erfassungselement, beliebig auf der Designblende angeordnet sein kann, ohne dass beispielsweise die Designblende selbst oder die Leuchteinheit verdeckt ist. Hierdurch wird das Erfassungselement beliebig in oder auf die Designblende integrierbar.

Gemäß einer weiteren Ausgestaltungsform ist es vorgesehen, dass die Außenleuchteinrichtung zwei Erfassungseinrichtungen umfasst, die räumlich voneinander getrennt an zwei sich gegenüberliegenden Randbereichen der Designblende angeordnet sind. Beispielsweise kann im Fall einer Außenleuchteinrichtung als Frontscheinwerfer des Kraftfahrzeugs die Designblende gekrümmt sein, sodass ein vorderer Teil der Designblende in Fahrzeuglängsrichtung gerichtet ist, wohingegen ein hinterer gegenüberliegender seitlicher Teil der Designblende in Fahrzeugquerrichtung zeigt. Werden nun sowohl in dem vorderen als auch im hinteren Bereich jeweilige Erfassungseinrichtungen positioniert, das heißt jeweilige Erfassungselemente mit zugehöriger Bilderfassungseinrichtung angeordnet, kann sowohl ein Frontbereich des Kraftfahrzeugs als auch der seitliche Bereich des Kraftfahrzeugs mit den beiden Erfassungseinrichtungen überwacht werden. Dies trägt dazu bei, dass letztendlich beispielsweise bei jeweiligen Außenleuchteinrichtungen in beiden Frontscheinwerfern sowie in beiden Rückleuchten des Kraftfahrzeugs die Rundumerfassung der Umgebung des Kraftfahrzeugs mittels der Erfassungseinrichtung ermöglicht wird. Alternativ zu der beschriebenen Anordnung auf oder in der Designblende können beispielsweise in einem oberen und unteren Bereich in Fahrzeughochrichtung der Designblende jeweilige flächige Erfassungselemente angeordnet sein. Letztendlich wird also die Rundumerfassung der Umgebung des Kraftfahrzeugs mittels geeignet platzierter Erfassungseinrichtungen ermöglicht.

Eine weitere vorteilhafte Ausgestaltungsform der Erfindung sieht vor, dass die Außenleuchteinrichtung eine Auswerteeinrichtung umfasst, die dazu ausgelegt ist, durch Auswerten der Bilddaten zumindest ein Objekt in der Umgebung des Kraftfahrzeugs zu erfassen, das erfasste Objekt unter Anwendung eines Objekterkennungskriteriums zu erkennen und das erkannte Objekt beschreibende Objektdaten bereitzustellen. Die Auswerteeinrichtung kann also beispielsweise auf Basis einer Methode des maschinellen Lernens, zum Beispiel mittels eines künstlichen neuronalen Netzwerks, eine Objekterkennung durchführen. Mit Hilfe der Auswerteeinrichtung kann somit erkannt werden, ob in den mit dem erfassten Licht korrelierten Bilddaten ein zusammenhängendes Objekt zu erkennen ist, wie beispielsweise eine Person, ein Gegenstand oder ein Symbol, wie beispielsweise ein Verkehrsschild, das in der Umgebung des Kraftfahrzeugs angeordnet ist.

Darüber hinaus ist die Auswerteeinrichtung dazu ausgebildet, das erfasste Objekt unter Berücksichtigung des Objekterkennungskriteriums zu erkennen, das heißt das Objekterkennungskriterium umfasst beispielsweise in einer Datenbank hinterlegte Charakteristika verschiedener Objekte. Hierbei ist beispielsweise eine typische Größe, Farbgebung und/oder Formen, ein typisches Reflexionsverhalten von Licht an dem Objekt und/oder eine typische ortsabhängige und/oder zeitabhängige Anordnung des Objekts hinterlegt. Als Objekt kann nun beispielsweise ein sich dem Kraftfahrzeug auf der Gegenfahrbahn näherndes anderes Fahrzeugen erfasst und erkannt werden. Das erkannte Objekt beschreibende Objektdaten werden von der Auswerteeinrichtung bereitgestellt, sodass diese beispielsweise an eine Steuereinrichtung des Kraftfahrzeugs oder der Außenleuchteinrichtung selbst übermittelt werden können. Die Objektdaten umfassen in diesem Beispiel die Information, dass ein Fahrzeug erkannt wurde, dass sich auf das Kraftfahrzeug zubewegt.

Die Auswerteeinrichtung weist hierfür beispielsweise eine Prozessoreinrichtung auf, die dazu eingerichtet ist, die beschriebene Objekterkennung durchzuführen. Die Prozessoreinrichtung kann hierzu zumindest einen Mikroprozessor oder zumindest einen Mikrocontroller aufweisen. Des Weiteren kann die Prozessoreinrichtung einen Programmcode aufweisen, der dazu eingerichtet ist, bei Ausführen durch die Prozessoreinrichtung die beschriebene Objekterkennung durchzuführen. Der Programmcode kann in einem Datenspeicher der Prozessoreinrichtung gespeichert sein.

Die Erfassungseinrichtung kann also nicht nur ein Abbild der Umgebung des Kraftfahrzeugs aufnehmen und somit bereitstellen, sondern auch mit Hilfe geeigneter Auswertemethoden die Umgebung des Kraftfahrzeugs tatsächlich untersuchen und die das erkannte Objekte beschreibende Objektdaten bereitstellen. Eine derartige Auswertung der von der Erfassungseinrichtung erfassten Daten ist beispielsweise sinnvoll, um einen Parkassistenten des Kraftfahrzeugs bei einem Einparkvorgang zu unterstützen, da beispielsweise mittels der in und/oder an der Designblende der jeweiligen Außenleuchteinrichtung des Kraftfahrzeugs positionierten Erfassungseinrichtung entsprechende Umgebungsdaten erfasst werden, die Informationen über das oder mehrere Objekte in der Umgebung bereitstellen und somit deren jeweiliges Identifizieren ermöglichen.

In einer weiteren besonders vorteilhaften Ausgestaltungsform der Erfindung ist es vorgesehen, dass die Außenleuchteinrichtung eine Steuereinrichtung zum Ansteuern einer Leuchteinheit der Außenleuchteinrichtung umfasst. Mittels der Steuereinrichtung kann beispielsweise eine Leuchtstärke der jeweiligen Leuchteinheit, das heißt beispielsweise des Frontscheinwerfers oder der Rückleuchte des Kraftfahrzeugs, eingestellt werden. Die Auswerteeinrichtung ist durch Anwenden des Objekterkennungskriteriums dazu ausgebildet, ein sich auf das Erfassungselement zubewegendes lichtaussendendes Fahrzeug zu erkennen. Anhand der oben beschriebenen Objekterkennung kann also erkannt werden, ob es sich bei einem Objekt in der Umgebung des Kraftfahrzeugs um ein anderes Fahrzeug handelt. Außerdem kann hierbei erkannt werden, ob dieses andere Fahrzeug Licht aussendet, das heißt zumindest eine aktivierte Außenleuchte aufweist. Das Aussenden von Licht, das heißt eine aktivierte Außenleuchte des sich zubewegenden Fahrzeugs, kann beispielsweise anhand entsprechender Lichtintensitätssignale, die von dem sich zubewegenden Fahrzeug ausgesendet und von der Außenleuchteinrichtung erfasst werden, erkannt werden.

Falls das sich auf das Erfassungselement zubewegende lichtaussendende Fahrzeug erkannt wurde, ist die Auswerteeinrichtung dazu ausgelegt, unter Anwendung eines Fahrsituationskriteriums ein Abblendsignal für die Leuchteinheit bereitzustellen. Dieses Fahrsituationskriterium umfasst Informationen, wie beispielsweise die Information, ob sich das Kraftfahrzeug und das erfasste Kraftfahrzeug frontal aufeinander zubewegen oder nicht. Es wird also eine Bewegungsrichtung der Erfassungseinrichtung sowie des erkannten Fahrzeugs relativ zueinander betrachtet. Denn nur bei einem Aufeinanderzubewegen sollten beispielsweise aktuell aktivierte Fernlichter von Frontleuchten des Kraftfahrzeugs in ihrer Intensität reduziert und folglich abgeblendet werden. Dass sich das Fahrzeug auf das Kraftfahrzeug zubewegt kann beispielsweise an der Farbe des jeweiligen vom Fahrzeug ausgesendeten Lichts erkannt werden, da ein vor dem Kraftfahrzeug fahrendes Fahrzeug, das sich in die gleiche Fahrrichtung bewegt, rot leuchtendes Licht der Rückleuchten in Richtung des Kraftfahrzeugs aussendet, wohingegen ein sich von hinten oder vorne in Fahrzeuglängsrichtung auf das Kraftfahrzeug zubewegendes Fahrzeug weißes Licht seiner Frontleuchten aussendet. Zur Bestimmung der Bewegungsrichtung des Kraftfahrzeugs können alternativ oder zusätzlich dazu der Auswerteeinrichtung Daten von entsprechenden Sensoren des Kraftfahrzeugs bereitgestellt und an diese übermittelt werden, sodass anhand dieser Sensordaten durch Anwendung des Fahrsituationskriteriums besonders zuverlässig und genau die Bewegungsrichtung des Kraftfahrzeugs und des Fahrzeugs zueinander ermittelt werden kann. Mithilfe des Fahrsituationskriteriums kann außerdem berücksichtigt werden, ob das Kraftfahrzeug und das Fahrzeug bei Tageslicht fahren oder bei Dunkelheit, da insbesondere bei einer Fahrt bei Dunkelheit ein rechtzeitiges Abblenden eines Fernlichts sinnvoll ist, um den Fahrer des sich zubewegenden lichtaussendenden Fahrzeugs nicht zu blenden und gegebenenfalls zu irritieren.

Die Steuereinrichtung der Außenleuchteinrichtung ist dazu ausgebildet, in Übereinstimmung mit dem von der Auswerteeinrichtung bereitgestellten Abblendsignal eine Lichtstärke der Leuchteinheit einzustellen. Die Steuereinrichtung wird also, wenn erfasst wird, dass beispielsweise auf der Gegenfahrbahn ein Fahrzeug fährt, das mit aktiviertem Frontlicht fährt und sich auf das Kraftfahrzeug zubewegt, mittels des Abblendsignals über dieses Fahrzeug informiert und wird daraufhin bei aktuell aktivierten Fernleuchten diese in ihrer Intensität reduzieren, das heißt abblenden.

Mit der Außenleuchteinrichtung kann also erreicht werden, dass eine etwaige Blendung von entgegenkommenden Fahrzeugen frühzeitig registriert und entsprechende Informationen zur Einstellung der Leuchtstärke der Außenleuchten des Kraftfahrzeugs, wie zum Beispiel der Frontleuchten, mittels der Auswerteeinrichtung für die Steuereinrichtung bereitgestellt werden. Mittels der Außenleuchteinrichtung ist somit ein zuverlässiges und schnelles automatisches Abblenden von Fernlicht realisierbar.

Das erfindungsgemäße Kraftfahrzeug weist eine Außenleuchteinrichtung auf, wie sie oben beschrieben wurde. Die im Zusammenhang mit der erfindungsgemäßen Außenleuchteinrichtung vorgestellten bevorzugten Ausgestaltungsformen und deren Vorteile gelten entsprechend, soweit anwendbar, für das erfindungsgemäße Kraftfahrzeug. Aus diesem Grund sind die entsprechenden Weiterbildungen des erfindungsgemäßen Kraftfahrzeugs hier nicht noch einmal beschrieben.

Das erfindungsgemäße Kraftfahrzeug ist bevorzugt als Kraftwagen, insbesondere als Personenkraftwagen oder Lastkraftwagen, oder als Personenbus oder Motorrad ausgestaltet.

Die Erfindung umfasst auch die Kombinationen der Merkmale der beschriebenen Ausführungsformen.

Im Folgenden sind Ausführungsbeispiele der Erfindung beschrieben. Hierzu zeigt:
- Fig. 1: eine schematische Darstellung eines Kraftfahrzeugs mit einer Außenleuchteinrichtung;
- Fig. 2: eine schematische Darstellung einer Außenleuchteinrichtung für ein Kraftfahrzeug mit auf einer Designblende befestigten Erfassungselement;
- Fig. 3: eine Außenleuchteinrichtung für ein Kraftfahrzeug mit in eine Designblende integriertem Erfassungselement;
- Fig. 4: eine schematische Darstellung eines Erfassungselements für eine Designblende eines Kraftfahrzeugs; und
- Fig. 5: eine schematische Darstellung einer Entfernungsbestimmung mittels einer Außenleuchteinrichtung eines Kraftfahrzeugs.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

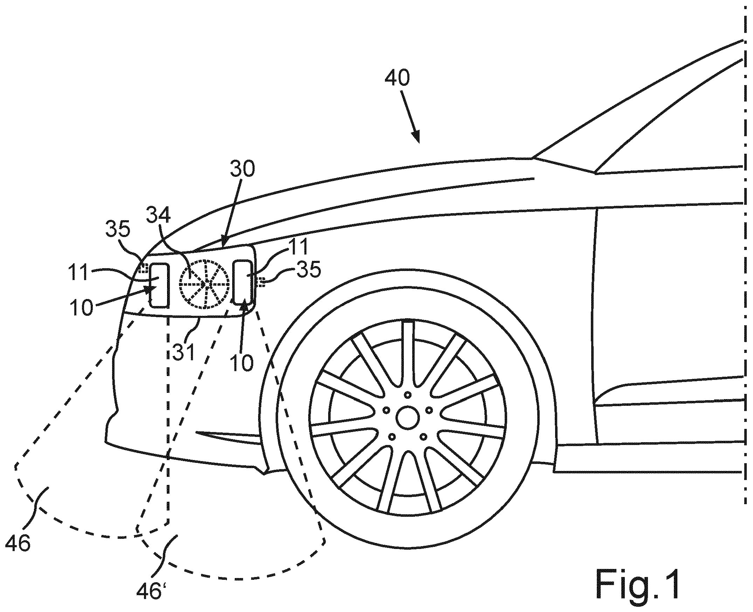

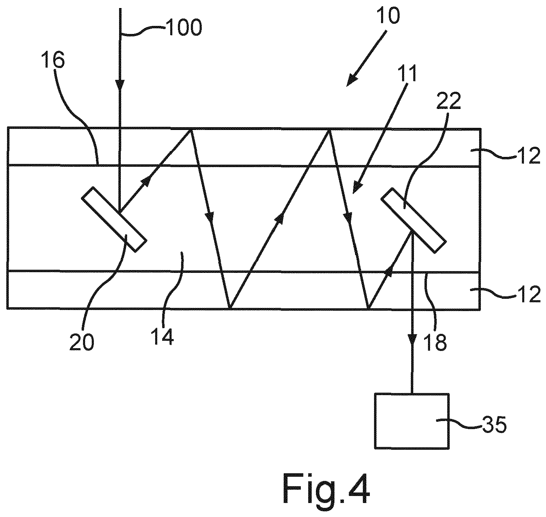

In Fig. 1 ist ein Kraftfahrzeug 40 skizziert, das als einen in Fahrzeuglängsrichtung vorderen linken Frontscheinwerfer eine Außenleuchteinrichtung 30 aufweist. Die Außenleuchteinrichtung 30 umfasst eine Designblende 31, eine dahinter angeordnete Leuchteinheit 34, welche dazu ausgebildet ist, weißes Leuchteinheitslicht durch die Designblende 31 auszusenden, sowie eine Erfassungseinrichtung 10. Die Erfassungseinrichtung 10 umfasst ein Erfassungselement 11 sowie eine Bilderfassungseinrichtung 35, die hier hinter der Designblende 31 angeordnet ist. Die Außenleuchteinrichtung 30 umfasst zwei Erfassungselemente 11, und zwar eines in einem in Fahrzeuglängsrichtung vorderen Bereich der Designblende 31 und eines in einem in Fahrzeuglängsrichtung hinteren Bereich der Designblende 31. Alternativ dazu kann die Außenleuchteinrichtung 30 nur ein Erfassungselement 11 oder mehr als zwei Erfassungselemente 11 aufweisen. Die Außenleuchteinrichtung 30 ist dazu ausgebildet, Bilddaten bereitzustellen, die mit von der Umgebung auf die zwei Erfassungselemente 11 treffenden Licht 100 (dargestellt mit dem Bezugszeichen 100 in Fig. 4) korreliert sind. Die Außenleuchteinrichtung 30 ermöglicht somit die Erfassung der Umgebung des Kraftfahrzeugs 40. Ein jeweiliger Erfassungsbereich 46, 46' der beiden Erfassungselemente 11 ist als in Fahrzeuglängsrichtung vorderer Erfassungsbereich 46 sowie als in Fahrzeuglängsrichtung hinterer Erfassungsbereich 46' jeweils in Form von kegelförmig skizzierten Bereichen in Fig. 1 skizziert. Das vordere Erfassungselement 11 ist dazu ausgelegt, zumindest teilweise in Fahrzeuglängsrichtung vor sowie in Fahrzeugquerrichtung neben das Kraftfahrzeug 40 "zu blicken", das heißt die dortige Umgebung zu erfassen. Das hintere Erfassungselement 11 mit dem Erfassungsbereich 46' ist demgegenüber dazu ausgebildet, lediglich einen seitlichen Umgebungsbereich des Kraftfahrzeugs 40 zu erfassen, das heißt den Bereich in Fahrzeuglängsrichtung links des Kraftfahrzeugs 40.

Bevorzugt ist eine weitere Außenleuchteinrichtungen 30 als hier nicht skizzierter vorderer rechter Frontscheinwerfer sowie zwei weitere Außenleuchteinrichtungen 30 als jeweilige nicht skizzierte Rückleuchten in das Kraftfahrzeug 40 integriert. Weist das Kraftfahrzeug 40 zumindest diese vier Außenleuchteinrichtungen 30 auf, ist eine vollständige Rundumerfassung der Umgebung des Kraftfahrzeugs 40 möglich.

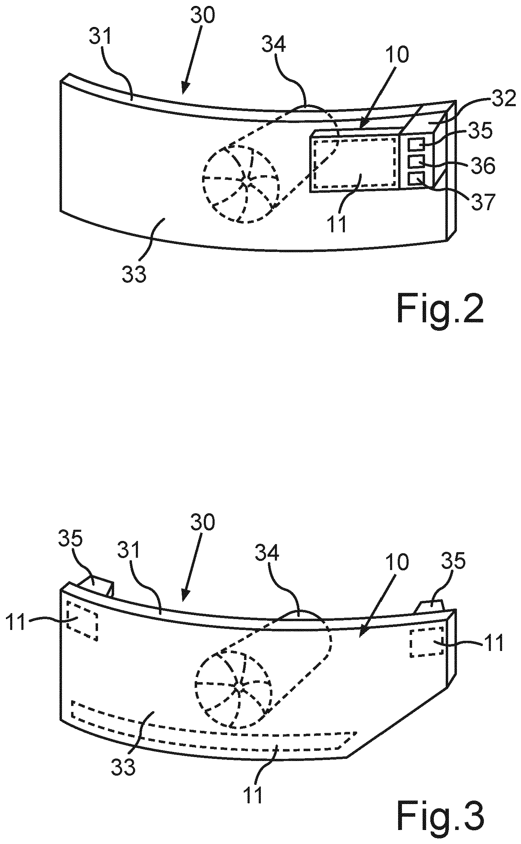

In Fig. 2 ist die Außenleuchteinrichtung 30 skizziert, wobei das Erfassungselement 11 mittels einer Befestigungseinheit 32 auf der Designblende 31 positioniert ist. Das Erfassungselement 11 kann hierbei eine leichte Krümmung aufweisen und somit parallel zu einer Oberflächenform 33 der Designblende 31 jedoch in einem vorgegebenen Abstand von der Oberfläche der Designblende 31 positioniert sein. In Fig. 2 ist zudem skizziert, dass die Erfassungseinrichtung 10 als Komponenten der Außenleuchteinrichtung 30 zusätzlich zu der Bilderfassungseinrichtung 35 eine Auswerteeinrichtung 36 sowie eine Steuereinrichtung 37 zum Ansteuern der Leuchteinheit 34 aufweisen kann.

**In** Fig. 3 ist die Außenleuchteinrichtung 30 skizziert, wobei drei Erfassungselemente 11 in die Designblende 31 direkt integriert sind. Hierfür sind beispielsweise transparente dem lokalen Oberflächenverlauf der Designblende 31 angepasst geformte Platten in die Designblende 31 integriert. Außerdem sind in Fig. 3 für die beiden oberen Erfassungselemente 11 die jeweiligen Bilderfassungseinrichtungen 35 skizziert, die hier hinter der Designblende 31 und somit für einen Betrachter nicht direkt sichtbar positioniert sind. Hierbei wird außerdem deutlich, dass die jeweiligen Erfassungselemente 11 räumlich voneinander getrennt, beispielsweise an sich gegenüberliegenden Randbereichen der Designblende 31, angeordnet sein oder sich beispielsweise über eine gesamte in Fahrtlängsrichtung verlaufende Längsseite der Designblende 31 erstrecken können.

In Fig. 4 ist die Funktionsweise der Außenleuchteinrichtung 30 skizziert. Hier wird deutlich, dass die Erfassungseinrichtung 10 ein Trägermedium 12 umfasst, das als Lichtleiter ausgebildet ist und an dem ein Einkoppelbereich 16 und ein Auskoppelbereich 18 bereitgestellt sind. Das Trägermedium 12 mit dem Einkoppelbereich 16 und dem Auskoppelbereich 18 ist das flächige an die Oberflächenform 33 der Designblende 31 angepasste Erfassungselement 11 für die Designblende 31.

Der Einkoppelbereich 16 ist als holografisches Element 14 mit einer ersten Ablenkstruktur 20 ausgebildet. Die erste Ablenkstruktur 20 ist dazu ausgelegt, Licht 100, das aus der Umgebung des Kraftfahrzeugs 40 auf die erste Ablenkstruktur 20 fällt, in das Trägermedium 12 einzukoppeln. Das Trägermedium 12 ist dazu ausgebildet, das eingekoppelte Licht 100 mittels interner Reflektionen von dem Einkoppelbereich 16 an den Auskoppelbereich 18 zu übertragen. Der Auskoppelbereich 18 ist als holografisches Element 14 mit einer zweiten Ablenkstruktur 22 ausgebildet. Die zweite Ablenkstruktur 22 ist dazu ausgelegt, das übertragene Licht 100, das auf die zweite Ablenkstruktur 22 fällt, aus dem Trägermedium 12 auszukoppeln. Direkt dahinter ist beispielsweise die Bilderfassungseinrichtung 35 angeordnet. Die Bilderfassungseinrichtung 35 ist dazu ausgebildet, das aus dem Erfassungselement 11 am Auskoppelbereich 18 ausgekoppelte Licht 100 zu erfassen und als Bilddaten bereitzustellen, die mit dem erfassten Licht 100 korrelieren. Die Bilderfassungseinrichtung 35 kann also beispielsweise als Kamerasensor ausgebildet sein. Der Einkoppelbereich 16 und der Auskoppelbereich 18 weisen als Ablenkstruktur 20, 22 zumindest ein optisches Gitter, insbesondere ein holografisches Volumengitter oder ein holografisches Oberflächengitter auf. Das Erfassungselement 11 selbst kann hierbei als transparente Platte, Folie oder Lack ausgebildet sein.

Die Auswerteeinrichtung 36 kann dazu ausgebildet sein, durch Auswerten der von der Bilderfassungseinrichtung 35 bereitgestellten Bilddaten zumindest ein Objekt 42 in der Umgebung zu erfassen, das erfasste Objekt 42 unter Anwendung eines Objekterkennungskriteriums zu erkennen und das erkannte Objekt 42 beschreibende Objektdaten bereitzustellen.

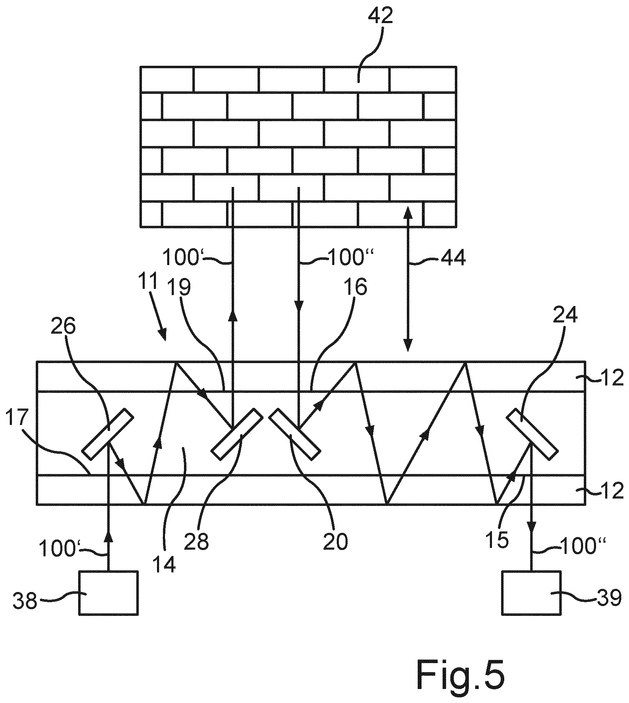

In Fig. 5 ist als ein derartiges Objekt 42 eine Wand in der Umgebung des Kraftfahrzeugs 40 skizziert. Das Objekt 42, das heißt die Wand, befindet sich in einer Entfernung 44 von dem Kraftfahrzeug 40. Die Außenleuchteinrichtung 30 umfasst zudem eine Lichtquelle 38 sowie eine Sensoreinrichtung 39. Außerdem ist am Trägermedium 12 ein Sensorauskoppelbereich 15 bereitgestellt, der als holografisches Element 14 mit einer dritten Ablenkstruktur 24 ausgebildet ist. Die Lichtquelle 38 ist dazu ausgebildet sein, gepulstes Licht 100' direkt in die Umgebung des Kraftfahrzeugs 40 auszusenden. Das gepulste Licht 100' kann beispielsweise infrarotes Laserlicht sein. Wie es in Fig. 5 skizziert ist, kann das von der Lichtquelle 38 ausgesendete gepulste Licht 100' auch indirekt zu dem Objekt 42 ausgesendet werden, und zwar durch das flächige Trägermedium 12, das heißt durch das Erfassungselement 11 hindurch. Hierfür sind am flächigen Trägermedium 12 ein Lichteinkoppelbereich 17 und ein Lichtauskoppelbereich 19 bereitgestellt. Der Lichteinkoppelbereich 17 ist hierbei als holografisches Element 14 mit einer vierten Ablenkstruktur 26 ausgebildet, der dazu ausgelegt ist, das von der Lichtquelle 38 ausgesendete gepulste Licht 100', das auf die vierte Ablenkstruktur 26 fällt, in das Trägermedium 12 einzukoppeln. Das Trägermedium 12 ist dazu ausgebildet, das eingekoppelte gepulste Licht 100' mittels interner Reflektion von dem Lichteinkoppelbereich 17 an den Lichtauskoppelbereich 19 zu übertragen. Der Lichtauskoppelbereich 19 ist als holografisches Element 14 mit einer fünften Ablenkstruktur 28 ausgebildet, die dazu ausgelegt ist, das übertragene von der Lichtquelle 38 ausgesendete Licht 100', das auf die fünfte Ablenkstruktur 28 fällt, aus dem Trägermedium 12 auszukoppeln und in die Umgebung auszusenden, das heißt in Richtung des Objekts 42. Das an der Wand reflektierte Licht 100", das zuerst von der Lichtquelle 38 ausgesendet und danach an dem Objekt 42 in der Umgebung reflektiert wurde, kann mittels des Einkoppelbereichs 16 wieder in das Trägermedium 12 eingekoppelt werden, wenn dieses reflektierte Licht 100" auf die erste Ablenkstruktur 20 fällt.

Das Trägermedium 12 ist dazu ausgebildet, dieses eingekoppelte reflektierte Licht 100" mittels interner Reflektion von dem Einkoppelbereich 16 an den Sensorauskoppelbereich 15 zu übertragen. Der Sensorauskoppelbereich 15 mit der dritten Ablenkstruktur 24 dient dazu, dass das auf die dritte Ablenkstruktur 24 treffende reflektierte Licht 100" aus dem Trägermedium 12 ausgekoppelt wird. Die Sensoreinrichtung 39 ist dazu ausgebildet, das am Sensorauskoppelbereich 15 ausgekoppelte Licht 100" zu erfassen und in Form von Sensordaten bereitzustellen. Diese Sensordaten beschreiben eine Laufzeitdauer des von der Lichtquelle 38 ausgesendeten und am dem Objekt 42 reflektierten Lichts 100", das von der Sensoreinrichtung 39 erfasst wurde. Die Auswerteeinrichtung 36 ist nun dazu ausgebildet, durch Auswerten der Sensordaten Entfernungsdaten bereitzustellen. Die Entfernungsdaten beschreiben die Entfernung 44 des Objekts 42 von der Erfassungseinrichtung 10, das heißt letztendlich von dem Kraftfahrzeug 40.

Die Auswerteeinrichtung 36 ist außerdem dazu ausgebildet, durch Anwenden des Objekterkennungskriteriums ein sich auf das Erfassungselement 11 zubewegendes lichtaussendendes Fahrzeug zu erkennen. Falls das sich auf das Erfassungselement 11 zubewegende lichtaussendende Fahrzeug erkannt wurde, wird unter Anwendung eines Fahrsituationskriteriums ein Abblendsignal für die Leuchteinheit 34 bereitgestellt. Die Steuereinrichtung 37 der Außenleuchteinrichtung 30, die in Fig. 2 skizziert ist, ist dazu ausgelegt, in Übereinstimmung mit dem von der Auswerteeinrichtung 36 bereitgestellten Abblendsignal eine Lichtstärke der Leuchteinheit 34 einzustellen. Wird also beispielsweise erkannt, dass sich ein Fahrzeug auf das Kraftfahrzeug 40 zubewegt, kann erkannt werden, dass das Kraftfahrzeug 40 beispielsweise aktuell mit aktiviertem Fernlicht fährt, das Fernlicht jedoch aufgrund dem sich von vorne nähernden anderen Fahrzeug abgeblendet werden sollte. In diesem Fall kann die Steuereinrichtung 37 nach Empfangen des Abblendsignals die Lichtstärke der Leuchteinheit 34 reduzieren. Das entgegenkommende Fahrzeug kann zum Beispiel anhand einer Farbe des von dem Fahrzeug ausgesendeten Scheinwerferlichts erkannt werden, wobei das Scheinwerferlicht als Licht 100 von einer der Bilderfassungseinrichtungen 35 des Kraftfahrzeugs 40 erfasst wurde. Anhand von der Auswerteeinrichtung 36 bereitgestellten Bewegungsdaten des Kraftfahrzeugs 40 selbst sowie den im Objekterkennungskriterium hinterlegten Informationen, beispielsweise betreffend die Objekterkennung von Fahrzeugen, kann außerdem eindeutig erkannt werden, dass sich in der Umgebung des Kraftfahrzeugs 40 ein Objekt 42 befindet, das als beleuchtetes Fahrzeug erkannt wird, und das erkannte Fahrzeug auf das Kraftfahrzeug 40 von vorne zufährt, sodass folglich das Fernlicht des Kraftfahrzeugs 40 deaktiviert werden sollte. Derartige Auswertungsschritte sowie Ansteuerbefehle für die Leuchtstärke der Leuchteinheit 34 können also mittels der Außenleuchteinrichtung 30 bestimmt und durchgeführt werden.

Insgesamt beschreibt die Erfindung eine Integration eines holografischen Elements (HOE) in eine Fahrzeugbeleuchtung, das heißt sie beschreibt die Außenleuchteinrichtung 30 für das Kraftfahrzeug 40. Mittels der Außenleuchteinrichtung 30 können Bildinhalte betreffend die Umgebung des Kraftfahrzeugs 40 über in der Designblende 31 oder an der Designblende 31 des Kraftfahrzeugs 40 angeordnete Erfassungselemente 11 aufgenommen werden. Hierdurch ergeben sich folgende Vorteile: Durch die flächige Ausgestaltung des Erfassungselements 11 kann dieses weniger schnell verschmutzen, kann transparent gehalten und somit nicht direkt sichtbar sein und mit unterschiedlichen optischen Funktionen ausgestattet sein, wie beispielsweise der Bereitstellung von Bilddaten und/oder dem Aussenden von gepulstem Licht 100' mittels der Lichtquelle 38. Durch die Position der Designblende 31 ist außerdem eine exponierte Lage am Kraftfahrzeug 40 ausgewählt, die eine optimale Übersicht über die Umgebung ermöglicht, sodass letztendlich besonders zuverlässige Umgebungsdaten bereitstellt werden können. Die mit der Außenleuchteinrichtung 30 bereitgestellten Informationen können beispielsweise zum zumindest teilautonomen Einparken, zum Erkennen von herannahenden oder bereits im toten Winkel befindlichen Objekten 42, zum Ausfahren aus Einfahrten, die den Blick nach links und rechts versperren, oder zum vollautomatisierten Einparken und dem damit verbundenen Erkennen von Freiräumen beitragen. Zudem kann die Außenleuchteinrichtung 30 etwaige Blendungen entgegenkommender Fahrzeuge registrieren und die damit verbundenen Informationen zur Einstellung der Leuchteinheit 34 zur Verfügung stellen, das heißt das entsprechende Abblendsignal ermitteln und für die Steuereinrichtung 37 der Leuchteinheit 34 bereitstellen.

Die jeweiligen Erfassungselemente 11 können zudem mittels einer Laserdistanzmessung die Entfernung 44 zwischen dem Kraftfahrzeug 40 und dem Objekt 42 in der Umgebung des Kraftfahrzeugs 40 bestimmen und so beispielsweise beim Einparken eine Messgenauigkeit von Sensoren des Kraftfahrzeugs 40 erhöhen. Die Laserdistanzmessung erfolgt mittels Erfassen und Auswerten des von der Lichtquelle 38 ausgesendeten an dem Objekt 42 reflektierten Lichts 100".

Die Außenleuchteinrichtung 30 kann hierfür entweder mit einer separaten Befestigungseinheit 32 ausgestattet sein, an der das Erfassungselement 11 befestigt wird. Alternativ dazu kann die Designblende 31 selbst das Erfassungselement 11 umfassen. Das Erfassungselement 11, das heißt das flächige Trägermedium 12 kann hierbei relativ klein sein und somit in etwa punktuell messen aber auch flächig ausgebildet sein, um beispielsweise großwinklige Aufnahmen der Umgebung zu ermöglichen.

Es ist außerdem möglich, mehrere Erfassungselemente 11 mit mehreren Bilderfassungseinrichtungen 35 einzusetzen um etwaigem Lichtverlust oder Aufnahmequalitätsverlust entgegenzuwirken. Die Bilderfassungseinrichtungen 35 können jeweils hinter der Designblende 31, entweder hinter der Karosserie selbst oder in einer versteckten Position im Inneren der Außenleuchteinrichtung 30 verbaut, und somit versteckt sein. Es ist außerdem möglich, Licht 100', von der Lichtquelle 38 direkt oder durch das Erfassungselement 11 in die Umgebung auszusenden, um damit die Umgebung zu beleuchten oder eben, wie oben beschrieben, die Distanz zu dem Objekt 42 zu messen, das heißt die Entfernung 44 zu bestimmen.

## Patentansprüche

1. Außenleuchteinrichtung (30) für ein Kraftfahrzeug (40), wobei die Außenleuchteinrichtung (30) eine Designblende (31) sowie zumindest eine Erfassungseinrichtung (10) mit einer Bilderfassungseinrichtung (35) und einem Trägermedium (12) umfasst, wobei das Trägermedium (12) als Lichtleiter ausgebildet ist, an dem ein Einkoppelbereich (16) und ein Auskoppelbereich (18) bereitgestellt sind, wobei
das Trägermedium (12) mit dem Einkoppelbereich (16) und dem Auskoppelbereich (18) als ein flächiges an eine Oberflächenform (33) der Designblende (31) angepasstes Erfassungselement (11) für die Designblende (31) ausgebildet ist;
der Einkoppelbereich (16) als holografisches Element (14) mit einer ersten Ablenkstruktur (20) ausgebildet ist, die dazu ausgelegt ist, Licht (100), das aus einer Umgebung auf die erste Ablenkstruktur (20) fällt, in das Trägermedium (12) einzukoppeln;
das Trägermedium (12) dazu ausgebildet ist, das eingekoppelte Licht (100) mittels interner Reflexion von dem Einkoppelbereich (16) an den Auskoppelbereich (18) zu übertragen;
der Auskoppelbereich (18) als holografisches Element (14) mit einer zweiten Ablenkstruktur (22) ausgebildet ist, die dazu ausgelegt ist, das übertragene Licht (100), das auf die zweite Ablenkstruktur (22) fällt, aus dem Trägermedium (12) auszukoppeln; und
die Bilderfassungseinrichtung (35) dazu ausgebildet ist, das aus dem Erfassungselement (11) am Auskoppelbereich (18) ausgekoppelte Licht (100) zu erfassen und als Bilddaten, die mit dem erfassten Licht (100) korrelieren, bereitzustellen,
wobei die Außenleuchteinrichtung (30) eine Lichtquelle (38), eine Sensoreinrichtung (39) und eine Auswerteeinrichtung (36) umfasst und am Trägermedium (12) ein Sensorauskoppelbereich (15) bereitgestellt ist, wobei
die Lichtquelle (38) dazu ausgebildet ist, gepulstes Licht (100') in die Umgebung auszusenden;
die erste Ablenkstruktur (20) des Einkoppelbereichs (16) dazu ausgelegt ist, Licht (100"), das von der Lichtquelle (38) ausgesendet und an einem Objekt in der Umgebung reflektiert wurde, in das Trägermedium einzukoppeln;
das Trägermedium (12) dazu ausgebildet ist, das eingekoppelte reflektierte Licht (100') mittels interner Reflexion von dem Einkoppelbereich (16) an den Sensorauskoppelbereich (15) zu übertragen;
der Sensorauskoppelbereich (15) als holografisches Element (14) mit einer dritten Ablenkstruktur (24) ausgebildet ist, die dazu ausgelegt ist, das in das Trägermedium (12) eingekoppelte reflektierte Licht (100") aus dem Trägermedium (12) auszukoppeln; und
die Sensoreinrichtung (39) dazu ausgebildet ist, das am Sensorauskoppelbereich (15) ausgekoppelte Licht (100") zu erfassen und in Form von Sensordaten bereitzustellen, die eine Laufzeitdauer des von der Lichtquelle (38) ausgesendeten und an dem Objekt (42) reflektierten Lichts (100") beschreiben, das von der Sensoreinrichtung (39) erfasst wurde; und
die Auswerteeinrichtung (36) dazu ausgebildet ist, durch Auswerten der Sensordaten Entfernungsdaten, die eine Entfernung des Objekts (42) von der Erfassungseinrichtung (10) beschreiben, bereitzustellen.

2. Außenleuchteinrichtung (30) nach dem vorhergehenden Anspruch, wobei an dem Trägermedium (12) ein Lichteinkoppelbereich (17) und ein Lichtauskoppelbereich (19) bereitgestellt sind, wobei
der Lichteinkoppelbereich (17) als holografisches Element (14) mit einer vierten Ablenkstruktur (26) ausgebildet ist, die dazu ausgelegt ist, Licht (100'), das von der Lichtquelle (38) auf die vierte Ablenkstruktur (26) fällt, in das Trägermedium (12) einzukoppeln;
das Trägermedium (12) dazu ausgebildet ist, das eingekoppelte Licht (100') mittels interner Reflexion von dem Lichteinkoppelbereich (17) an den Lichtauskoppelbereich (19) zu übertragen; und
der Lichtauskoppelbereich (19) als holografisches Element (14) mit einer fünften Ablenkstruktur (28) ausgebildet ist, die dazu ausgelegt ist, das übertragene Licht (100'), das auf die fünfte Ablenkstruktur (28) fällt, aus dem Trägermedium (12) auszukoppeln und in die Umgebung auszusenden.

3. Außenleuchteinrichtung (30) nach dem vorhergehenden Anspruch, wobei der Einkoppelbereich (16) und der Auskoppelbereich (18) als Ablenkstruktur (20, 22) zumindest ein optisches Gitter, insbesondere ein holografisches Volumengitter oder ein holografisches Oberflächengitter, aufweisen.

4. Außenleuchteinrichtung (30) nach einem der vorhergehenden Ansprüche, wobei das Erfassungselement (11) auf der Designblende (31) mittels einer Befestigungseinheit (32) befestigt oder in die Designblende (31) intergiert ist.

5. Außenleuchteinrichtung (30) nach einem der vorhergehenden Ansprüche, wobei das Erfassungselement (11) als transparente Platte, Folie oder Lack ausgebildet ist.

6. Außenleuchteinrichtung (30) nach einem der vorhergehenden Ansprüche, wobei die Außenleuchteinrichtung (30) zwei Erfassungseinrichtungen (10) umfasst, die räumlich voneinander getrennt an zwei sich gegenüberliegenden Randbereichen der Designblende (31) angeordnet sind.

7. Außenleuchteinrichtung (30) nach einem der vorhergehenden Ansprüche, wobei die Außenleuchteinrichtung (30) eine Auswerteeinrichtung (36) umfasst, die dazu ausgebildet ist, durch Auswerten der Bilddaten zumindest ein Objekt (42) in der Umgebung zu erfassen, das erfasste Objekt (42) unter Anwendung eines Objekterkennungskriteriums zu erkennen und das erkannte Objekt (42) beschreibende Objektdaten bereitzustellen.

8. Außenleuchteinrichtung (30) nach dem vorhergehenden Anspruch, wobei die Außenleuchteinrichtung (30) eine Steuereinrichtung (37) zum Ansteuern einer Leuchteinheit (34) der Außenleuchteinrichtung (30) umfasst, die Auswerteeinrichtung (36) durch Anwendung des Objekterkennungskriteriums dazu ausgebildet ist, ein sich auf das Erfassungselement (11) zubewegendes Licht aussendendes Fahrzeug zu erkennen und, falls das sich auf das Erfassungselement (11) zubewegende Licht aussendende Fahrzeug erkannt wurde, unter Anwendung eines Fahrsituationskriteriums ein Abblendsignal für die Leuchteinheit (34) bereitzustellen, und die Steuereinrichtung (37) dazu ausgebildet ist, in Übereinstimmung mit dem von der Auswerteeinrichtung (36) bereitgestellten Abblendsignal eine Lichtstärke der Leuchteinheit (34) einzustellen.

9. Kraftfahrzeug (40) mit einer Außenleuchteinrichtung (30) nach einem der vorhergehenden Ansprüche.

## Claims

1. An external lighting device (30) for a motor vehicle (40), wherein the external lighting device (30) comprises a design screen (31) and at least one capturing device (10) comprising an image-capturing device (35) and a carrier medium (12), wherein the carrier medium (12) is designed as an optical waveguide, on which an in-coupling region (16) and an out-coupling region (18) are provided, wherein
the carrier medium (12) comprising the in-coupling region (16) and the out-coupling region (18) is designed as a capturing element (11), adapted to a surface shape (33) of the design screen (31), for the design screen (31);
the in-coupling region (16) is designed as a holographic element (14) comprising a first deflection structure (20), which is configured to couple light (100) incident on the first deflection structure (20) from the surroundings into the carrier medium (12);
the carrier medium (12) is designed to transmit the coupled-in light (100) from the in-coupling region (16) to the out-coupling region (18) by means of internal reflection;
the out-coupling region (18) is designed as a holographic element (14) comprising a second deflection structure (22), which is configured to couple the transmitted light (100) incident on the second deflection structure (22) out of the carrier medium (12); and
the image-capturing device (35) is designed to capture the light (100) coupled out of the capturing element (11) at the out-coupling region (18) and to provide it as image data that correlates with the captured light (100),
wherein the external lighting device (30) comprises a light source (38), a sensor device (39) and an evaluation device (36), and a sensor out-coupling region (15) is provided on the carrier medium (12), wherein
the light source (38) is designed to emit pulsed light (100') into the surroundings;
the first deflection structure (20) of the in-coupling region (16) is configured to couple light (100") emitted by the light source (38) and reflected by an object in the surroundings into the carrier medium;
the carrier medium (12) is designed to transmit the coupled-in reflected light (100') from the in-coupling region (16) to the sensor out-coupling region (15) by means of internal reflection; the sensor out-coupling region (15) is designed as a holographic element (14) comprising a third deflection structure (24), which is configured to couple the reflected light (100") coupled into the carrier medium (12) out of the carrier medium (12); and
the sensor device (39) is designed to capture the light (100") coupled out at the sensor out-coupling region (15) and to provide it in the form of sensor data describing a time of flight of the light (100") that is emitted by the light source (38), reflected by the object (42), and has been captured by the sensor device (39); and
the evaluation device (36) is designed to provide distance data describing a distance between the object (42) and the capturing device (10) by evaluating the sensor data.

2. The external lighting device (30) according to the preceding claim, wherein a light in-coupling region (17) and a light out-coupling region (19) are provided on the carrier medium (12), wherein
the light in-coupling region (17) is designed as a holographic element (14) comprising a fourth deflection structure (26), which is configured to couple light (100') incident on the fourth deflection structure (26) from the light source (38) into the carrier medium (12);
the carrier medium (12) is designed to transmit the coupled-in light (100') from the light in-coupling region (17) to the light out-coupling region (19) by means of internal reflection; and the light out-coupling region (19) is designed as a holographic element (14) comprising a fifth deflection structure (28), which is configured to couple the transmitted light (100') incident on the fifth deflection structure (28) out of the carrier medium (12) and to emit it into the surroundings.

3. The external lighting device (30) according to the preceding claim, wherein the in-coupling region (16) and the out-coupling region (18) comprise at least one optical grating, in particular a holographic volume grating or a holographic surface grating, as a deflection structure (20, 22).

4. The external lighting device (30) according to any of the preceding claims, wherein the capturing element (11) is fastened to the design screen (31) by means of a fastening unit (32) or is integrated in the design screen (31).

5. The external lighting device (30) according to any of the preceding claims, wherein the capturing element (11) is designed as a transparent plate, film, or coating.

6. The external lighting device (30) according to any of the preceding claims, wherein the external lighting device (30) comprises two capturing devices (10), which are arranged to be spatially separated from one another on two opposing edge regions of the design screen (31).

7. The external lighting device (30) according to any of the preceding claims, wherein the external lighting device (30) comprises an evaluation device (36), which is designed to, by evaluating the image data, capture at least one object (42) in the surroundings, recognize the captured object (42) by applying an object recognition criterion, and provide object data describing the captured object (42).

8. The external lighting device (30) according to the preceding claim, wherein the external lighting device (30) comprises a control device (37) for actuating a lighting unit (34) of the external lighting device (30), wherein, by applying the object recognition criterion, the evaluation device (36) is designed to recognize a vehicle emitting light moving toward the capturing element (11), and if the vehicle emitting light moving toward the capturing element (11) is recognized, to provide a low-beam signal for the lighting unit (34) by applying a driving situation criterion, and wherein the control device (37) is designed to set a light intensity of the lighting unit (34) in accordance with the low-beam signal provided by the evaluation device (36).

9. A motor vehicle (40) comprising an external lighting device (30) according to any of the preceding claims.

## Revendications

1. Dispositif d'éclairage extérieur (30) pour un véhicule automobile (40), dans lequel le dispositif d'éclairage extérieur (30) comprend un cache enjoliveur (31) ainsi qu'au moins un dispositif de détection (10) pourvu d'un dispositif de détection d'image (35) et d'un support porteur (12), le support porteur (12) étant réalisé sous la forme d'un guide optique sur lequel une zone d'injection (16) et une zone d'extraction (18) sont fournies, dans lequel
le support porteur (12) pourvu de la zone d'injection (16) et de la zone d'extraction (18) est réalisé sous la forme d'un élément de détection (11) plan pour le cache enjoliveur (31), adapté à une forme de surface (33) du cache enjoliveur (31) ;
la zone d'injection (16) est réalisée sous la forme d'un élément holographique (14) pourvu d'une première structure de déviation (20) qui est conçue pour injecter dans le support porteur (12) la lumière (100) qui est incidente à partir d'un environnement sur la première structure de déviation (20) ;
le support porteur (12) est réalisé pour transmettre la lumière injectée (100) au moyen d'une réflexion interne de la zone d'injection (16) à la zone d'extraction (18) ;
la zone d'extraction (18) est réalisée sous la forme d'un élément holographique (14) pourvu d'une deuxième structure de déviation (22) qui est conçue pour extraire du support porteur (12) la lumière transmise (100) qui est incidente sur la deuxième structure de déviation (22) ; et
le dispositif de détection d'image (35) est réalisé pour détecter la lumière (100) extraite de l'élément de détection (11) au niveau de la zone d'extraction (18) et pour la fournir sous forme de données d'image qui sont en corrélation avec la lumière détectée (100),
dans lequel le dispositif d'éclairage extérieur (30) comprend une source de lumière (38), un dispositif capteur (39) et un dispositif d'évaluation (36), et une zone d'extraction de capteur (15) est fournie au niveau du support porteur (12), dans lequel
la source de lumière (38) est réalisée pour émettre une lumière pulsée (100') dans l'environnement ;
la première structure de déviation (20) de la zone d'injection (16) est conçue pour injecter dans le support porteur la lumière (100") qui a été émise par la source de lumière (38) et réfléchie sur un objet dans l'environnement ;
le support porteur (12) est réalisé pour transmettre la lumière réfléchie injectée (100') au moyen d'une réflexion interne de la zone d'injection (16) à la zone d'extraction de capteur (15) ;
la zone d'extraction de capteur (15) est réalisée sous la forme d'un élément holographique (14) pourvu d'une troisième structure de déviation (24) qui est conçue pour extraire du support porteur (12) la lumière réfléchie (100") injectée dans le support porteur (12) ; et
le dispositif capteur (39) est réalisé pour détecter la lumière (100") extraite au niveau de la zone d'extraction de capteur (15) et pour la fournir sous forme de données de capteur qui décrivent une durée de propagation de la lumière (100") émise par la source de lumière (38) et réfléchie sur l'objet (42), qui a été détectée par le dispositif capteur (39) ; et
le dispositif d'évaluation (36) est réalisé pour fournir par l'évaluation des données de capteur des données de distance qui décrivent une distance entre l'objet (42) et le dispositif de détection (10).

2. Dispositif d'éclairage extérieur (30) selon la revendication précédente, dans lequel une zone d'injection de lumière (17) et une zone d'extraction de lumière (19) sont fournies au niveau du support porteur (12), dans lequel
la zone d'injection de lumière (17) est réalisée sous la forme d'un élément holographique (24) pourvu d'une quatrième structure de déviation (26) qui est conçue pour injecter dans le support porteur (12) la lumière (100') qui est incidente de la source de lumière (38) sur la quatrième structure de déviation (26) ;
le support porteur (12) est réalisé pour transmettre la lumière injectée (100') au moyen d'une réflexion interne de la zone d'injection de lumière (17) à la zone d'extraction de lumière (19) ; et
la zone d'extraction de lumière (19) est réalisée sous la forme d'un élément holographique (14) pourvu d'une cinquième structure de déviation (28) qui est conçue pour extraire du support porteur (12) la lumière transmise (100') qui est incidente sur la cinquième structure de déviation et pour l'émettre dans l'environnement.

3. Dispositif d'éclairage extérieur (30) selon la revendication précédente, dans lequel la zone d'injection (16) et la zone d'extraction (18) présentent en tant que structure de déviation (20, 22) au moins un réseau optique, en particulier un réseau holographique en volume ou un réseau holographique de surface.

4. Dispositif d'éclairage extérieur (30) selon l'une quelconque des revendications précédentes, dans lequel l'élément de détection (11) est fixé sur le cache enjoliveur (31) au moyen d'une unité de fixation (32) ou est intégré dans le cache enjoliveur (31).

5. Dispositif d'éclairage extérieur (30) selon l'une quelconque des revendications précédentes, dans lequel l'élément de détection (11) est réalisé sous la forme d'une plaque transparente, d'un film ou d'un vernis.

6. Dispositif d'éclairage extérieur (30) selon l'une quelconque des revendications précédentes, dans lequel le dispositif d'éclairage extérieur (30) comprend deux dispositifs de détection (10) qui sont disposés de manière physiquement séparée l'un de l'autre dans deux zones marginales opposées du cache enjoliveur (31).

7. Dispositif d'éclairage extérieur (30) selon l'une quelconque des revendications précédentes, dans lequel le dispositif d'éclairage extérieur (30) comprend un dispositif d'évaluation (36) qui est réalisé pour détecter par l'évaluation des données d'image au moins un objet (42) dans l'environnement, pour identifier l'objet détecté (42) en appliquant un critère de reconnaissance d'objet et pour fournir des données d'objet décrivant l'objet reconnu (42).

8. Dispositif d'éclairage extérieur (30) selon la revendication précédente, dans lequel le dispositif d'éclairage extérieur (30) comprend un dispositif de commande (37) pour piloter une unité d'éclairage (34) du dispositif d'éclairage extérieur (30), le dispositif d'évaluation (36), par l'application du critère de reconnaissance d'objet, est réalisé pour reconnaître un véhicule émettant de la lumière se rapprochant de l'élément de détection (11), et si le véhicule émettant la lumière se rapprochant de l'élément de détection a été reconnu, par l'application d'un critère de situation de conduite, pour fournir un signal anti-éblouissement pour l'unité d'éclairage (34), et le dispositif de commande (37) est réalisé pour régler une intensité de lumière de l'unité d'éclairage (34) en concordance avec le signal anti-éblouissement fourni par le dispositif d'évaluation (36).

9. Véhicule automobile (40), comprenant un dispositif d'éclairage extérieur (30) selon l'une quelconque des revendications précédentes.
